# EUROPEAN PATENT SPECIFICATION

(11) **EP 1 650 464 B1**
(45) Date of publication and mention of the grant of the patent: **06.08.2008**
(21) Application number: 04256574.7
(22) Date of filing: 25.10.2004
(51) Int. Cl.: F16D 65/22, F16D 65/32

(54) **Lever assembly for a vehicle brake and method of assembly therefor**
Bremshebelanordnung für Motorfahrzeug und Verfahren zur Montage
Assemblage de levier de freinage pour véhicule et procédé pour son assemblage

(43) Date of publication of application: 26.04.2006
(73) Proprietor: Meritor Heavy Vehicle Braking Systems (UK) Limited, Cwmbran, Gwent NP44 3XU (GB)
(72) Inventor: Niehorster, Keith, SA2 9EJ South Glamorgan (GB)
(74) Representative: Foot, Paul Matthew James

(56) References cited:
- EP-A- 1 348 882
- US-A- 3 741 350
- US-A- 5 379 867
- US-A- 5 433 298
- US-A- 5 449 052
- US-A- 5 788 022
- US-A- 5 833 035

## Description

The present invention relates to a vehicle brake assembly and, more particularly, to a lever assembly for actuating the brake and a method of assembly therefor.

Disc brake assemblies typically include a disc brake caliper that houses one or more pistons for forcing a friction element or brake pad into engagement with one face of a rotor. In disc brakes of the sliding caliper type, a second friction element facing the opposite face of the rotor is brought into contact with the rotor due to the ability of the caliper to slide relative to the rotor. Heavy-duty vehicle brake assemblies commonly include multiple pistons that are actuated by a pneumatic actuator via an eccentric cam arrangement. The heavy-duty brake assemblies may be relatively complicated compared to passenger vehicle brake assemblies and may be specifically tailored to particular heavy vehicle applications see e.g. US-A-5 379 867.

As such, brakes manufactured on a single line may require differing components to be assembled to meet the demands of these differing applications. This can prove problematic with known brakes as the parts inventory required to meet the various demands may be high, thereby increasing overall manufacturing costs.

The present invention seeks to overcome, or at least mitigate the problems of the prior art.
Accordingly, one aspect of the present invention provides a lever assembly for a vehicle brake comprising: an operating shaft comprising a lever aperture; a lever engageable with said lever aperture; and a retainer pin insertable into the assembly to retain the lever in the lever aperture.

A second aspect of the present invention provides a method of assembling a lever assembly into a vehicle brake housing comprising the steps of: (1) assembling an operating shaft comprising a lever aperture into a brake housing portion through a first opening; and (2) passing a lever through a second opening in said brake housing into the lever aperture; and (3) inserting a retainer pin into the assembly to retain the lever in the lever aperture.

Embodiments of the present invention will now be described with reference to the accompanying drawings, in which:
Figure 1 is a cross-sectional end view of a vehicle brake assembly of the present invention;
Figure 2 is a partially cross-sectional top elevational view of the brake assembly of the present invention;
Figure 3 is a side elevation of a housing portion of a caliper part of the brake assembly of Fig. 1 during assembly thereof;
Figure 4 is a cross-section view on the plane E-E of Fig. 3;
Figure 5 is a side elevation of a partly assembled lever assembly of the present invention;
Figure 6 is a cross-sectional view on the plane G-G of Fig. 5;
Figure 7 is an enlarged view of section H of Fig. 6; and
Figure 8 is a perspective view of the fully assembled lever of the present invention.

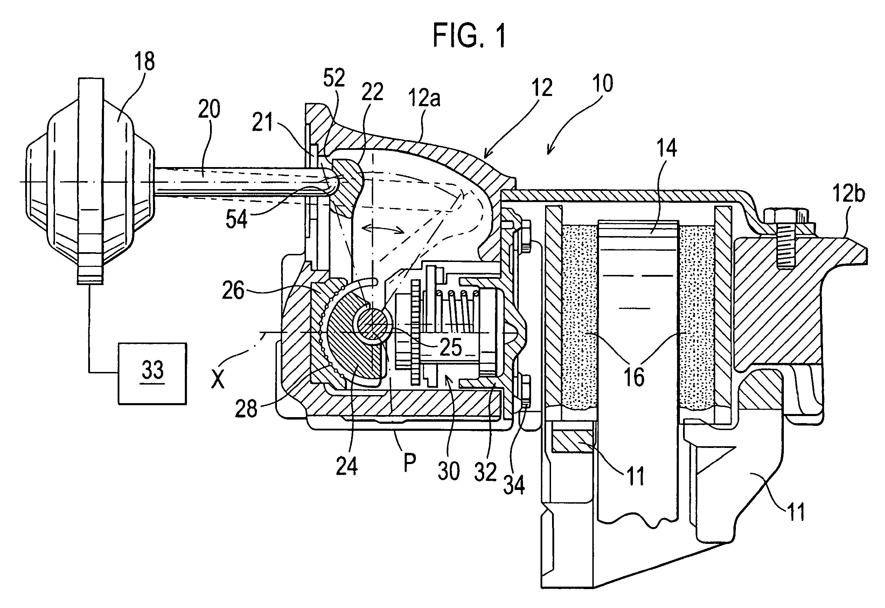

Figure 1 illustrates a general sectional view of a vehicle brake assembly 10. The vehicle brake assembly 10 includes a caliper 12 that may be constructed from one or more portions. A bridge portion 12b of the caliper 12 is arranged to straddle a rotor 14 and has brake pads 16, or friction elements, arranged on either side of the planar surfaces of the rotor 14. The caliper 12 further includes a housing portion 12a. The housing portion 12a and bridge portion 12b, which in this embodiment are formed from separate pieces. In other embodiments the two portions may be integral. The entire caliper is able to slide parallel to axis X on a carrier 11. The carrier further provides support for the friction elements in a circumferential and radially inwards direction.

An actuator 18 (illustrated schematically), typically an air chamber, actuates a brake mechanism 30 to directly force on brake pad 16 into engagement with the rotor 14. The other brake pad 16 is brought into contact with the rotor 14 due to the sliding action of the caliper 12 relative to the rotor. The actuator 18 drives a push rod 20 through a push rod opening 21 to rotate a lever assembly 22 about a pivot point P. The lever assembly 22 includes an eccentric cam 24 having a profile 25 that cooperates with the brake mechanism 30 to drive the brake pads 16. The cam 24 amplifies the force supplied by the actuator 18 when it is transmitted via mechanism 30 to the pads 16. The cam 24 is preferably received at least partially within a bearing block 26 supporting a plurality of needle bearings 28 within the housing 12. It should be understood that various actuating systems which are operated by a lever will benefit from the present invention.

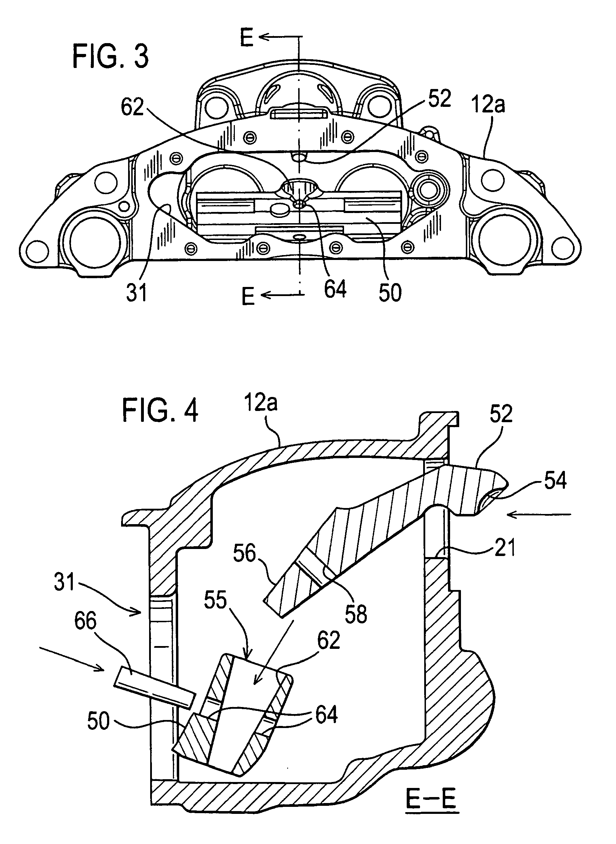

The opening 31 (Figure 4) of the housing, which receives the brake mechanism 30 is closed off on the front side. That is, in the position facing the brake rotor 14, by a closing plate 32 which preferably at least partially supports the brake mechanism 30. The closing plate 32 is attached to the housing portion 12a by fasteners such as bolts 34 or the like. Sealing elements (not shown) are preferably located upon the sealing surfaces between the closing plate 32 and the housing portion 12a.

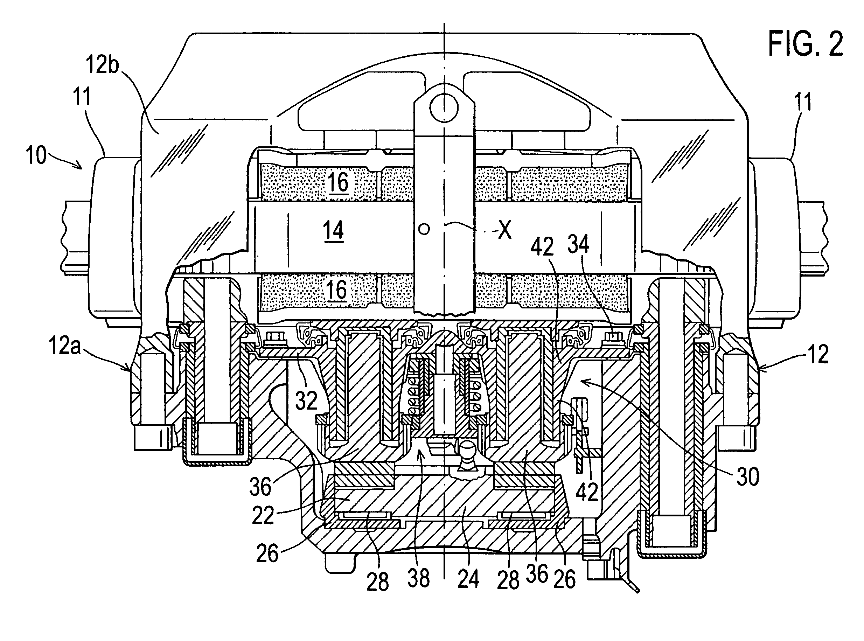

In operation, upon actuation of the brake pedal by the vehicle operator, a pneumatic output is typically produced by a control module 33 to energize the actuator 18. Heavy-duty vehicle brake assemblies typically include a pair of pistons 36 (Figure 2) that transmit the force generated by the actuator 18 through the push rod 20 and lever assembly 22 to the brake pads 16. The pads 16 effectively clamp against opposite faces of the rotor 14 and generate frictional drag forces to retard rotation of the rotor and hence the wheel with which it is associated. It is to be understood that any suitable number of pistons 36 may be used.

As the friction material of the brake pads 16 wears, the rest position of the pads is adjusted by an adjuster mechanism 38 positioned between pistons 36 to provide the correct running clearance for the brake. The operation of such mechanisms is well known in the art, and does not form part of the present invention.

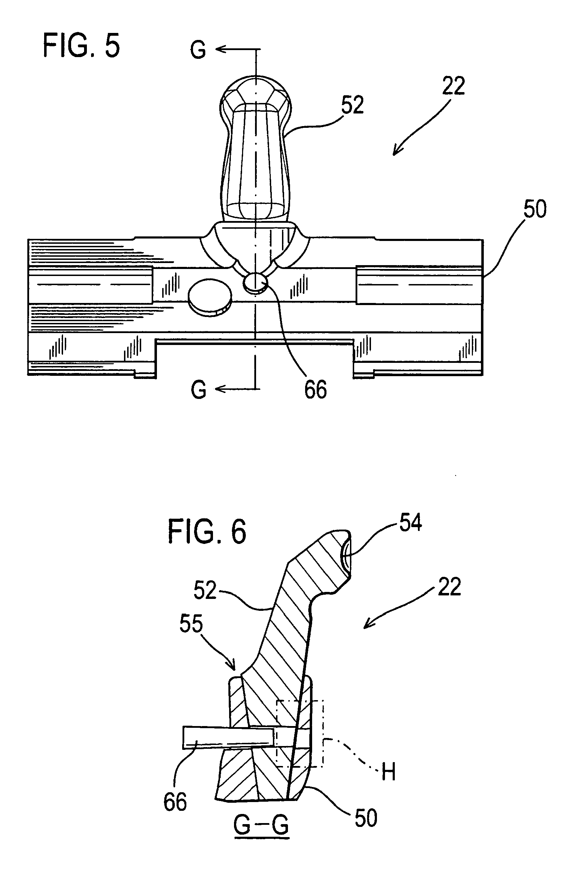

Referring to Figures 5, 6 and 8 the lever assembly 22 includes an operating shaft 50 and a lever 52 mounted thereto.

The operating shaft 50 includes the cams 24. It should be understood that various operating shaft 50 profiles will benefit from the present invention. The operating shaft 50 further includes a tapered lever aperture 62 arranged transverse the axis of rotation P of the operating shaft on the cams 24. A tapering bore 64 extends through the walls of the lever aperture 62 substantially at right angles thereto.

The lever 52 includes a cupped segment 54 for receipt of the push rod 20 (Figure 1). It should be understood that levers of a specific design, such as a desired length specific to a particular brake assembly 10 may be interchangeably assembled to a common operating shaft 50 according to the present invention. Likewise, operating shafts of a design specific to a particular brake assembly 10 may be interchangeably assembled with a common lever according to the present invention.

A taper pin portion 56 and a transverse bore 58 are formed directly into the lever 52. That is, the lever 52 is preferably manufactured from a single piece of material to provide high strength. The lever 52 may also be manufactured of a material different than the operating shaft 50 to further increase the strength thereof.

An interface 55 between the lever aperture 62 of the operating shaft 50 and the taper pin portion 56 of the lever 52 includes an orientation feature such that the lever 52 can only be mounted to the operating shaft 50 in a proper orientation. In other words, the cupped segment 54 for receipt of the push rod 20 is properly located. The orientation feature 55 is in this embodiment provided by making the taper pin portion 56 and lever aperture 62 oval in cross-section rather than circular. In other embodiments a key and slot arrangement could alternatively be used, for example.

Referring to Figure 4, an assembly sequence for the lever assembly 22 is illustrated. The operating shaft 50 is assembled into the housing portion 12a. The operating shaft 50 is assembled into the housing such that the lever aperture 62 is generally orientated towards the push rod opening 21. The lever 52 is passed through the push rod opening 21 and into the lever aperture 62.

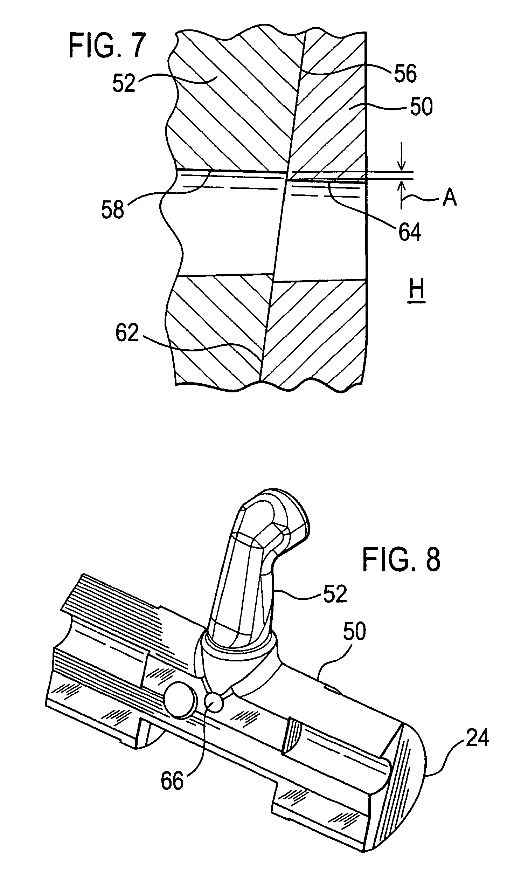

Then, with particular reference to Figs. 4, 6 and 7, a tapering retainer pin 66 is inserted into bore 64 from the housing opening 31. When hand fitted together, an offset A exists between bores 58 and 64. The offset value may vary depending upon the degree of tapering, and materials from which the components are manufactured but, is typically between 0.2 and 1mm, preferably 0.5 mm. As the retainer pin 66 is forced home the offset is reduced or removed and a secure connection between lever 52 and operating shaft 50 is created as shown in Fig. 8.

The brake mechanism 30, closing plate 32, housing portion 12a and bridge portion 12b may then be assembled together. In its assembled state, the retainer pin 66 does not interfere with operation of the brake mechanism 30 or adjuster mechanism 38.

By utilising a two-piece lever assembly, the needs of particular heavy vehicle applications can be met with a minimal number of interchangeable operating shaft and lever portions, rather than multiple complete lever assemblies, thus minimising the number of separate component castings needed, and inventory to be carried.

The foregoing description is exemplary rather than defined by the limitations within. Many modifications and variations of the present invention are possible in light of the above teachings. The preferred embodiments of this invention have been disclosed, however, one of ordinary skill in the art would recognize that certain modifications would come within the scope of this invention. It is, therefore, to be understood that within the scope of the appended claims, the invention may be practiced otherwise than as specifically described. In particular the invention may be employed in differing types of brake, such as fixed caliper, sliding rotor brakes. An additional aperture may be provided in the underside of the brake housing specifically for the insertion of the lever, rather than assembling it through the lever aperture. Furthermore, an aperture may be provided in the rear of the housing to allow the retainer pin to be inserted to secure the lever to the operating shaft after the brake mechanism has been fitted to the housing. In turn, this would permit the lever to be inserted into the lever aperture in the final stages of brake. It will, of course, be apparent that, in the variant, the bores in which the retainer pin fit would taper in the opposite direction. The retainer pin may be provided with some means to ensure its positive securement in the complementary bores. For example, the thinnest end of the pin may be threaded such that a nut and washer can be secured to the pin to hold it in the required position. The nut could also be used to draw the pin through the bore, as an alternative to driving the pin home.

## Claims

1. A lever assembly (22) for a vehicle brake (10) comprising:
an operating shaft (50) comprising a lever aperture (62);
a lever (52) engageable with said lever aperture; and
a retainer pin (64) insertable into the assembly to retain the lever in the lever aperture.

2. The lever assembly as recited in claim 1, wherein the lever aperture is tapered and the lever has a corresponding taper pin portion (56).

3. The lever assembly as recited in claim 1 or 2, wherein the retainer pin is insertable into a first bore (64) in the operating shaft and a second bore (58) in the lever.

4. The lever assembly as recited in claim 3, wherein the bores are axially offset when push fitted, but may be brought into substantial axial alignment when the retainer pin is driven home.

5. The lever assembly as recited in claim 3 or claim 4, wherein the retainer pin and first and second bores are tapered.

6. The lever assembly as recited in any preceding claim, further comprising an anti-rotation feature between said lever and said operating shaft.

7. A brake caliper incorporating a lever assembly according to any preceding claim.

8. A method of assembling a lever assembly (22) into a vehicle brake housing (12a) comprising the steps of:
(1) assembling an operating shaft (50) comprising a lever aperture (62) into a brake housing portion (12a) through a first opening (31); and
(2) passing a lever (52) through a second opening (21) in said brake housing into the lever aperture; and
(3) inserting a retainer pin into the assembly to retain the lever in the lever aperture.

9. A method as recited in claim 8, wherein said second opening is a push rod opening (21).

10. A method as recited in claim 8 or claim 9, wherein in step (3) the retainer pin is driven home to retain the lever in the lever aperture.

## Patentansprüche

1. Hebelanordnung (22) für eine Fahrzeugbremse (10), die Folgendes umfasst:
eine Betätigungswelle (50) mit einer Hebelöffnung (62);
einen Hebel (52), der mit der Hebelöffnung in Eingriff gebracht werden kann; und
einen Haltestift (66), der in die Anordnung eingeführt werden kann, um den Hebel in der Hebelöffnung zu halten.

2. Hebelanordnung nach Anspruch 1, wobei die Hebelöffnung konisch zulaufend ist und der Hebel einen Stiftteil (56) mit entsprechender Konizität aufweist.

3. Hebelanordnung nach Anspruch 1 oder 2, wobei der Haltestift in eine erste Bohrung (64) in der Betätigungswelle und in eine zweite Bohrung (58) in dem Hebel eingeführt werden kann.

4. Hebelanordnung nach Anspruch 3, wobei die Bohrungen beim Eindrücken axial versetzt sind, aber in eine im Wesentlichen axiale Ausrichtung gebracht werden können, wenn der Haltestift eingetrieben wird.

5. Hebelanordnung nach Anspruch 3 oder 4, wobei der Haltestift und die erste und die zweite Bohrung konisch zulaufend sind.

6. Hebelanordnung nach einem der vorhergehenden Ansprüche, weiterhin mit einem Drehsicherungsmerkmal zwischen dem Hebel und der Betätigungswelle.

7. Bremssattel mit einer Hebelanordnung nach einem der vorhergehenden Ansprüche.

8. Verfahren zur Montage einer Hebelanordnung (22) in einem Fahrzeugbremsgehäuse (12a) mit den folgenden Schritten:
(1) Montieren einer Betätigungswelle (50), die eine Hebelöffnung (62) aufweist, in einen Bremsgehäuseteil (12a) durch eine erste Öffnung (31); und
(2) Hindurchführen eines Hebels (52) durch eine zweite Öffnung (21) im Bremsgehäuse in die Hebelöffnung; und
(3) Einführen eines Haltestifts in die Anordnung zum Festhalten des Hebels in der Hebelöffnung.

9. Verfahren nach Anspruch 8, wobei es sich bei der zweiten Öffnung um eine Druckstangenöffnung (21) handelt.

10. Verfahren nach Anspruch 8 oder 9, wobei in Schritt (3) der Haltestift eingetrieben wird, um den Hebel in der Hebelöffnung zu halten.

## Revendications

1. Ensemble (22) de levier pour frein (10) de véhicule comportant :
un arbre (50) d'actionnement comportant un orifice (62) pour levier ;
un levier (52) susceptible de s'enclencher avec ledit orifice pour levier ; et
une goupille (66) de retenue susceptible d'être insérée dans l'ensemble pour retenir le levier dans l'orifice pour levier.

2. Ensemble de levier selon la revendication 1, l'orifice pour levier étant conique et le levier présentant une partie (56) correspondante de goupille conique.

3. Ensemble de levier selon la revendication 1 ou 2, la goupille de retenue étant susceptible d'être insérée dans un premier alésage (64) dans l'arbre d'actionnement et un deuxième alésage (58) dans le levier.

4. Ensemble de levier selon la revendication 3, les alésages étant décalés axialement lors de l'ajustement par pression, mais pouvant être amenés à s'aligner substantiellement axialement lorsque la goupille de retenue est enfoncée.

5. Ensemble de levier selon la revendication 3 ou la revendication 4, la goupille de retenue et les premier et deuxième alésages étant coniques.

6. Ensemble de levier selon l'une quelconque des revendications précédentes, comportant en outre une entité anti-rotation entre ledit levier et ledit arbre d'actionnement.

7. Étrier de frein intégrant un ensemble de levier selon l'une quelconque des revendications précédentes.

8. Procédé d'assemblage d'un ensemble (22) de levier dans un boîtier (12a) de frein pour véhicule, comportant les étapes consistant à :
(1) assembler un arbre (50) d'actionnement comportant un orifice (62) pour levier dans une partie (12a) de boîtier de frein à travers une première ouverture (31) ;
(2) faire passer un levier (52) jusque dans l'orifice pour levier à travers une deuxième ouverture (21) pratiquée dans ledit boîtier de frein ; et
(3) insérer une goupille de retenue dans l'ensemble pour retenir le levier dans l'orifice pour levier.

9. Procédé selon la revendication 8, ladite deuxième ouverture étant une ouverture (21) de poussoir.

10. Procédé selon la revendication 8 ou la revendication 9, la goupille de retenue étant enfoncée lors de l'étape (3) pour retenir le levier dans l'orifice pour levier.
